# FASCICULE DE BREVET EUROPEEN

(11) **EP 3 521 117 B1**
(45) Date de publication et mention de la délivrance du brevet: **22.07.2020**
(21) Numéro de dépôt: 19155407.0
(22) Date de dépôt: 05.02.2019
(51) Int. Cl.: B60T 13/74

(54) **ACTIONNEUR ELECTROMECANIQUE DE FREIN DE VEHICULE, COMPRENANT UNE REGION DE RUPTURE MECANIQUE**
ELEKTROMECHANISCHER BREMSAKTUATOR EINES FAHRZEUGS, DER EINEN MECHANISCHEN SOLLBRUCHBEREICH UMFASST
ELECTROMECHANICAL ACTUATOR FOR VEHICLE BRAKE, COMPRISING A MECHANICAL FRACTURE REGION

(30) Priorité: 06.02.2018 FR 1850988
(43) Date de publication de la demande: 07.08.2019
(73) Titulaire: Foundation Brakes France, 93700 Drancy (FR)
(72) Inventeur: NÈGRE, Gilles, 06140 VENCE (FR)
(74) Mandataire: Brevalex

(56) Documents cités:
- US-A- 4 804 073
- US-A1- 2005 077 782
- US-B1- 6 364 085

## Description

### DOMAINE TECHNIQUE

L'invention se rapporte aux freins pour véhicule. Plus précisément, elle concerne un actionneur électromécanique pour frein à tambour.

### ÉTAT DE LA TECHNIQUE ANTÉRIEURE

Des freins à tambour pour véhicule automobile comprennent un actionneur électrique, un plateau et deux mâchoires de freinage.

Lorsque le frein est monté sur une véhicule, l'espace disponible à un utilisateur pour détacher l'actionneur par rapport au plateau est parfois insuffisant. Un utilisateur est alors obligé de détacher la roue par rapport au châssis du véhicule, puis l'actionneur relativement au châssis, avant de pouvoir desserrer le frein.

Il existe un besoin de desserrer manuellement un frein de véhicule, notamment en cas de défaillance du frein ou pour remplacer l'actionneur, sans avoir à démonter le frein et la roue à freiner. Un actionneur électromécanique pour un frein de véhicule qui permet l'accès à des éléments de transmission pour serrer ou desserrer le frein en cas de défaillance du moteur est connu du document US 6 364 085 B1.

### EXPOSÉ DE L'INVENTION

A cet égard, l'invention a pour objet un actionneur électromécanique pour frein de véhicule. L'actionneur comprend un moteur électrique et un dispositif de transmission.

Le dispositif de transmission est configuré pour être entrainé par le moteur électrique lors du freinage et du défreinage.

Selon l'invention, l'actionneur comprend un carter comprenant une première région et une deuxième région de plus grande résistance mécanique que la première région. La première région est configurée pour être rompue en donnant accès au moteur électrique et/ou au dispositif de transmission pour desserrer le frein.

Grâce à l'actionneur, il est possible de desserrer manuellement un frein de véhicule, notamment en cas de défaillance du frein, sans avoir à démonter la roue et le frein associé au préalable. Par ailleurs, les risques de corrosion du frein sont limités, puisque le carter ne présente pas d'ouvertures avant que la première région soit rompue.

L'invention peut comporter de manière facultative une ou plusieurs des caractéristiques suivantes combinées entre elles ou non.

Selon une particularité de réalisation, le carter est étanche aux liquides, notamment à l'eau, lorsque la première région n'est pas rompue.

Selon une particularité de réalisation, la première région est à un emplacement prédéterminé du carter et avec une surface prédéterminée.

De préférence, la deuxième région a une surface supérieure à celle de la première région.

Selon une particularité de réalisation, la première région est configurée pour être plus accessible à un utilisateur qu'au moins une attache configurée pour raccorder l'actionneur à un plateau de frein et/ou un étrier de frein, lorsque l'actionneur est monté sur le véhicule.

Selon une particularité de réalisation, la première région comprend un repère visuel pour la repérer sur le carter.

De préférence, le repère visuel comprend un marquage et/ou une portion en saillie d'une surface externe du carter.

Selon une particularité de réalisation, la première région est configurée pour être rompue par un outil de serrage et/ou un outil contendant.

De préférence, l'outil de serrage comprend une tête de serrage tel qu'une clé hexagonale ou un tournevis.

De préférence, l'outil contendant comprend une pince coupante.

Selon une particularité de réalisation, l'outil configuré pour rompre la première région est configuré pour desserrer le frein lorsque la première région est rompue.

Selon une particularité de réalisation, la première région est configurée pour donner accès à un arbre du moteur et/ou à un élément de transmission du dispositif de transmission tel qu'un arbre ou une roue dentée.

Selon une particularité de réalisation, la première région est située à une extrémité longitudinale du carter de l'actionneur.

Selon une particularité de réalisation, la première région est située au niveau d'une région centrale du carter de l'actionneur selon sa direction transversale.

Selon une particularité de réalisation, la première région est située à une extrémité latérale du carter de l'actionneur.

L'invention concerne aussi un frein de véhicule comprenant un actionneur tel que défini ci-dessus.

De préférence, le frein est un frein à tambour.

L'invention a trait également à un ensemble de freinage comprenant un frein tel que défini ci-dessus et un outil configuré pour rompre la première région de l'actionneur du frein. L'outil est attaché au frein, notamment lorsque le frein est monté sur le véhicule.

### BRÈVE DESCRIPTION DES DESSINS

La présente invention sera mieux comprise à la lecture de la description d'exemples de réalisation, en référence aux dessins annexés sur lesquels :
- la figure 1 est une représentation schématique partielle de côté d'un frein à tambour selon un premier mode de réalisation de l'invention, qui est installé sur un véhicule ;
- la figure 2 est une représentation schématique partielle en perspective d'un frein à tambour comprenant un actionneur électromécanique selon le premier mode de réalisation, avant rupture d'une première région de l'actionneur ;
- la figure 3 est une représentation schématique partielle en perspective d'un frein à tambour comprenant un actionneur électromécanique selon le premier mode de réalisation, après rupture de la première région de l'actionneur ;
- la figure 4 est une représentation schématique partielle en perspective d'un frein à tambour comprenant un actionneur électromécanique selon un deuxième mode de réalisation, avant rupture d'une première région de l'actionneur ;
- la figure 5 est une représentation schématique partielle de face d'un frein à tambour comprenant un actionneur électromécanique selon le deuxième mode de réalisation, après rupture de la première région de l'actionneur ;
- la figure 6 est une représentation schématique partielle en perspective d'un frein à tambour comprenant un actionneur électromécanique selon un troisième mode de réalisation, avant rupture d'une première région de l'actionneur ;
- la figure 7 est une représentation schématique partielle de face d'un frein à tambour comprenant un actionneur électromécanique selon le troisième mode de réalisation, après rupture de la première région de l'actionneur.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

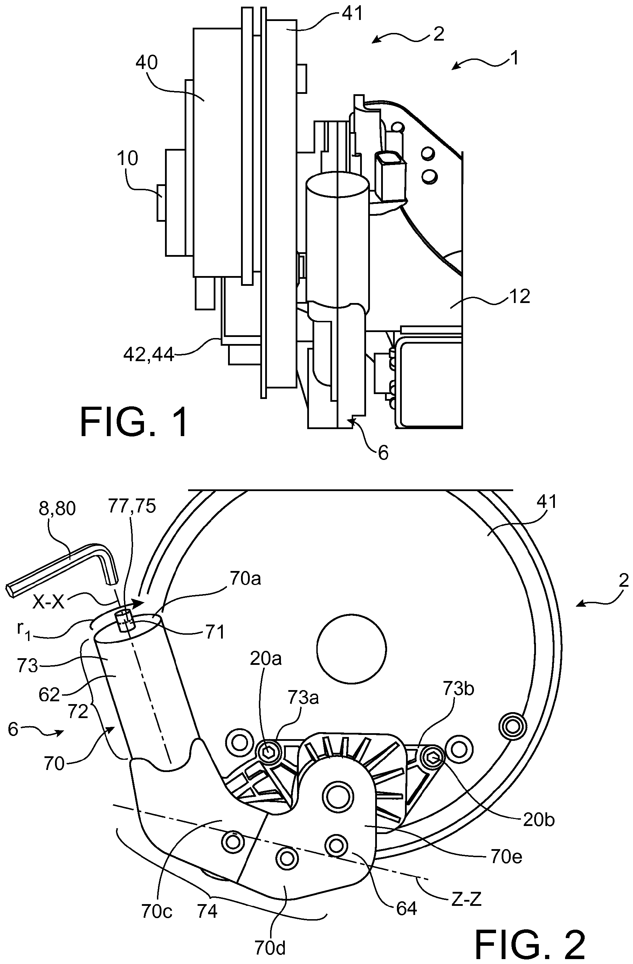

La figure 1 représente un frein à tambour 2 qui est installé sur véhicule 1. Le frein à tambour 2 comprend un tambour 40, un plateau 41 qui est fixé à un châssis 12 du véhicule, deux mâchoires 42 de freinage, un cylindre de roue (non représenté), et un point d'appui (non représenté). Le frein à tambour 2 comprend également un actionneur électromécanique 6, et il est du type frein électromécanique. Le frein à tambour 2 peut être utilisé en tant que frein de service et/ou en tant que frein de stationnement.

Le tambour 40 est traversé par un moyeu 10 de la roue à freiner, auquel il est attaché et dont il est solidaire en rotation. Le plateau 41 sert de support au frein, en étant immobile par rapport au châssis 12.

Le point d'appui est une région d'appui et de pivotement des mâchoires de freinage 42 sur le plateau 41.

Les mâchoires de freinage 42 comprennent chacune une jante et une garniture de frein 44 qui est située à la périphérie de la jante. Les mâchoires de freinage 42 sont configurées chacune pour être sollicitée en écartement en pivotant autour du point d'appui, sous l'action de l'actionneur électromécanique 6 et/ou du cylindre de roue, lors du freinage et/ou du défreinage de la roue.

En référence conjointe aux figures 2 à 7, l'actionneur électromécanique 6 comprend un moteur électrique 62, un dispositif de transmission 64 et un carter d'actionneur 70.

Le moteur électrique 62 comprend un arbre 63 principal. Il est relié mécaniquement au dispositif de transmission 64 qu'il entraine en mouvement relativement au carter d'actionneur 70.

Le dispositif de transmission 64 comprend des éléments de transmission de type arbre 66 et/ou roue dentée 68. Le dispositif de transmission 64 comprend au moins deux étages de réduction. Il est configuré pour entrainer le déplacement des mâchoires 42 relativement au plateau 41 lorsqu'il est entrainé par le moteur électrique 62. Il joue le rôle de réducteur.

Le carter d'actionneur 70 comprend un carter 72 du moteur électrique et un carter 74 du dispositif de transmission. Il est divisé en une première région 71 et en une deuxième région 73 qui présente une plus grande résistance mécanique que celle de la première région 71. Le carter d'actionneur 70 comprend une extrémité externe 70a, une extrémité interne 70e qui est située à l'opposé de l'extrémité externe 70a, une région centrale 70c et au moins une région latérale 70d. Le carter d'actionneur 70 est monobloc. Il est raccordé de manière détachable au plateau 41 par au moins une première attache 20a et une deuxième attache 20b. Le carter d'actionneur 70 est étanche aux liquides, notamment à l'eau, tant que la première région 71 n'est pas rompue.

Le carter 72 du moteur électrique s'étend autour d'une direction longitudinale X-X qui est inclinée, par exemple d'environ 25°, par rapport à la direction de l'essieu du véhicule. Le carter 72 du moteur s'étend depuis l'extrémité externe 70a du carter jusqu'au carter 74 du dispositif de transmission.

Le carter 74 du dispositif de transmission s'étend autour d'une direction longitudinale Z-Z qui est sensiblement orthogonale par rapport à la direction de l'essieu du véhicule. Le carter 74 du dispositif de transmission s'étend depuis le carter 72 du moteur électrique jusqu'à une région de raccordement du carter d'actionneur 70 au plateau 41 qui comprend l'extrémité interne 70e du carter. Cette région de raccordement comprend un premier orifice 73a de raccordement pour l'introduction de la première attache 20a et un deuxième orifice 73b de raccordement pour l'introduction de la deuxième attache 20b.

La région centrale 70c du carter est située à proximité de l'axe longitudinal X-X du carter 72 de moteur électrique ou à proximité de l'axe longitudinal Z-Z du carter 74 du dispositif de transmission. Par opposition, la région latérale 70d est plus éloignée de ces axes que la région centrale 70c et elle comprend une extrémité latérale du carter d'actionneur 70.

La première attache 20a comprend une vis de serrage du carter d'actionneur 70 au plateau. Elle est introduite dans le premier orifice 73a de raccordement. La deuxième attache 20b comprend une vis de serrage du carter d'actionneur 70 au plateau, qui est introduite dans le deuxième orifice 73b de raccordement.

La première attache 20a et la deuxième attache 20b sont parfois difficilement accessibles à un utilisateur qui souhaite détacher l'actionneur 6 du plateau 41, par exemple pour remplacer l'actionneur 6. L'utilisateur est alors amené à détacher la roue et le frein à tambour 2 associé du véhicule 1, avant de détacher l'actionneur 6 du plateau 41 en retirant les attaches 20a, 20b.

Dans les modes de réalisation qui sont représentés aux figures 2 à 7, la rupture mécanique de la première région 71 par l'utilisateur lui donne accès au moteur électrique 62 et/ou au dispositif de transmission 64 pour lui permettre de desserrer manuellement le frein 2. La première région 71 est située à un emplacement prédéterminé du carter d'actionneur 70, en étant plus facilement accessible à un utilisateur que les attaches 20a, 20b.

La première région 71 présente une surface a₁ qui est très inférieure à la surface a₂ de la deuxième région 73, ce qui limite les risques de rupture accidentelle de la première région 71. À titre d'exemple, le rapport de surface a₁ de la première région sur la surface a₂ de la deuxième région est compris entre 5% et 15%.

En cas de rupture de la première région 71, la deuxième région 73 reste attachée au plateau 41, en étant fixe par rapport au châssis 12 du véhicule. La deuxième région 73 forme alors l'intégralité du carter d'actionneur 70.

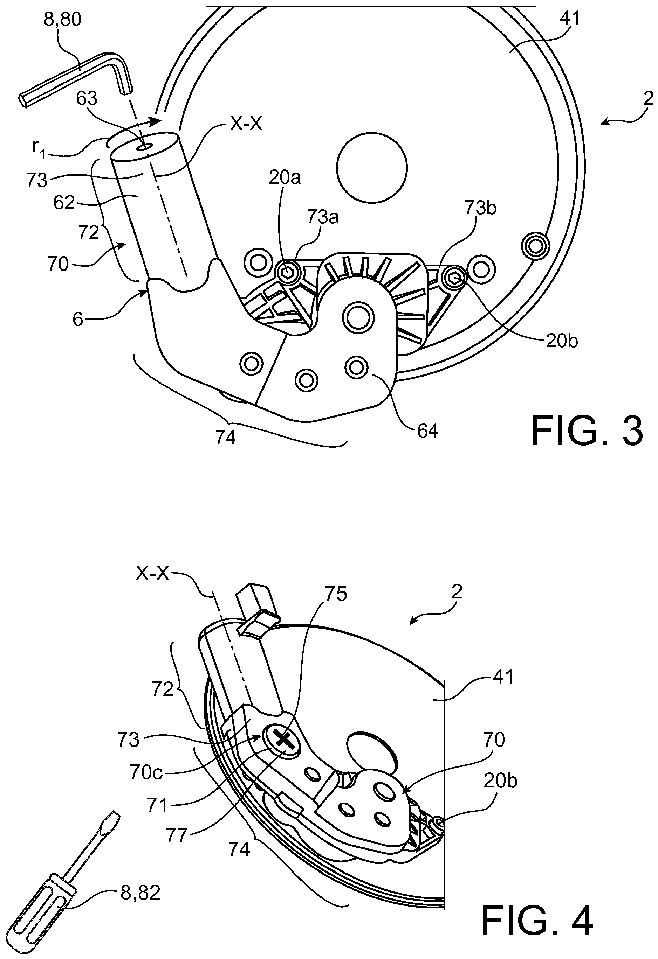

En référence plus spécifiquement au premier mode de réalisation qui est représenté aux figures 2 et 3, la première région 71 est située au niveau de l'extrémité externe 70a du carter d'actionneur 70. La première région 71 donne accès à un utilisateur à l'arbre principal 63 du moteur électrique 62 lorsqu'elle est rompue. L'utilisateur peut alors desserrer manuellement le frein à tambour 2.

La première région 71 comprend une portion en saillie 77 et un marquage visuel 75. La première région 71 est configurée pour être en prise avec un appendice de serrage d'une clé hexagonale 80. La première région 71 présente une surface a₁ qui est sensiblement égale à celle d'un diamètre de la tête de serrage de la clé hexagonale 80.

La portion en saillie 77 est en saillie depuis une surface externe du carter 72 de moteur électrique. Elle a une forme hexagonale de forme complémentaire de celle de la clé hexagonale 80.

Le marquage visuel 75 prend la forme d'une ligne curviligne sur le carter d'actionneur 70. Ce marquage 75 montre notamment le sens de rotation Ri à exercer avec la clé hexagonale 80 pour rompre la portion en saillie 77.

La portion en saillie 77 et le marquage 75 forment conjointement un repère visuel de la première région 71 relativement à la deuxième région 73.

En référence plus spécifiquement à la figure 3, l'arbre principal 63 a été rendu accessible à l'utilisateur par la rupture de la portion en saillie 77. L'utilisateur peut alors se servir de la clé hexagonale 80, qu'il a utilisé pour rompre la portion en saillie 77, pour entrainer en rotation l'arbre principal 63 selon la flèche Ri autour de l'axe longitudinal X-X du moteur par rapport au carter d'actionneur 70. Il desserre alors le frein à tambour 2. Une fois que le frein 2 est desserré, l'utilisateur peut déplacer le véhicule 1, avant de retirer la roue et de remplacer l'actionneur 6 et/ou le frein 2.

La clé hexagonale 80 sert alors à la fois d'outil 8 pour rompre la première région 71 et d'outil pour desserrer manuellement le frein, ce qui facilite le desserrage du frein 2. Cette clé hexagonale 80 est également connue sous la dénomination de clé « Allen », du nom de son inventeur. La clé hexagonale 80 est par exemple attachée au frein 2, notamment au carter d'actionneur 70, lorsqu'elle n'est pas utilisée.

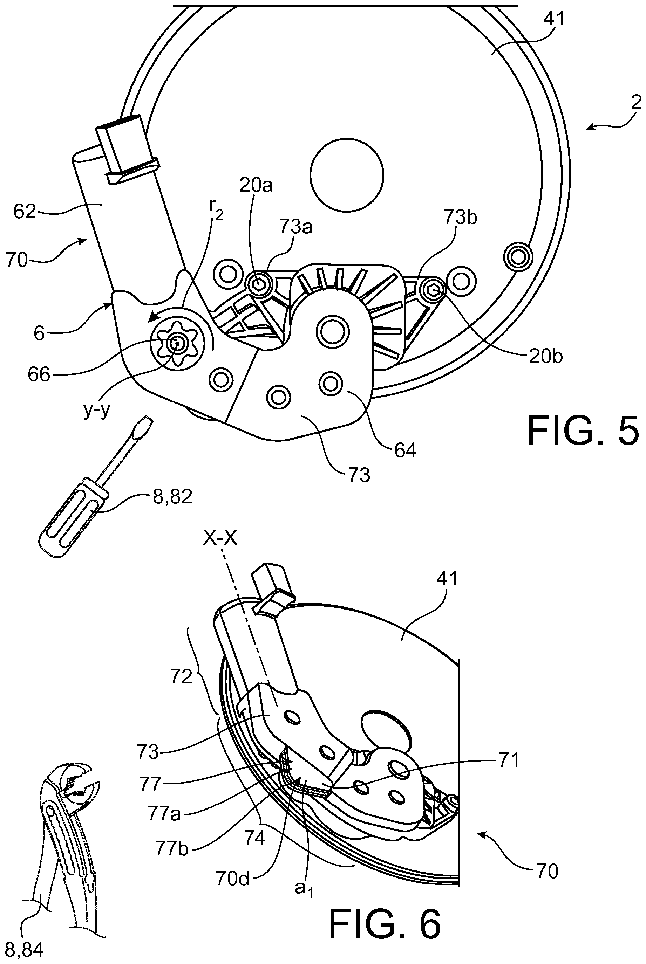

En référence plus spécifiquement au deuxième mode de réalisation qui est représenté aux figures 4 et 5, la première région 71 est située au niveau d'une région centrale 70c du carter d'actionneur 70. La première région 71 donne accès à un utilisateur à un arbre 66 du dispositif de transmission 64 lorsqu'elle est rompue. L'utilisateur peut alors desserrer manuellement le frein à tambour 2. Le deuxième mode de réalisation se distingue principalement du premier mode de réalisation par l'emplacement et la forme de la première région 71.

La première région 71 comprend une portion en saillie 77 et un marquage 75. La première région 71 est configurée pour être en prise avec la tête de serrage du tournevis 82. La première région 71 présente une surface a₁ qui est sensiblement égale à celle du diamètre de la tête de serrage du tournevis 82.

La portion en saillie 77 est en saillie depuis une surface externe du carter 74 du dispositif de transmission.

Le marquage 75 prend la forme d'une empreinte de tournevis 82. Dans le mode de réalisation représenté, le marquage 75 est une empreinte cruciforme.

La portion en saillie 77 et le marquage 75 forment conjointement un repère visuel de la première région 71 relativement à la deuxième région 73.

En référence plus spécifiquement à la figure 5, l'arbre 66 du dispositif de transmission a été rendu accessible à l'utilisateur par la rupture de la portion en saillie 77. L'utilisateur peut alors se servir du tournevis 82, qu'il a utilisé pour rompre la portion en saillie 77, pour entrainer en rotation l'arbre 66 du dispositif de transmission par rapport au carter d'actionneur 70. L'arbre 66 est entrainé en rotation selon la flèche R₂ autour de l'axe longitudinal Y-Y de l'arbre 66 qui est sensiblement orthogonal à l'axe longitudinal Z-Z du dispositif de transmission 64. L'utilisateur desserre alors le frein à tambour 2. Une fois que le frein 2 est desserré, l'utilisateur peut déplacer le véhicule 1, avant de retirer la roue et le frein 2. Il peut alors remplacer l'actionneur 6 et/ou le frein 2.

Le tournevis 82 sert alors à la fois d'outil 8 pour rompre la première région 71 et d'outil pour desserrer manuellement le frein, ce qui facilite le desserrage du frein 2. Le tournevis 82 est par exemple attaché au frein 2, notamment au carter d'actionneur 70, lorsqu'il n'est pas utilisé.

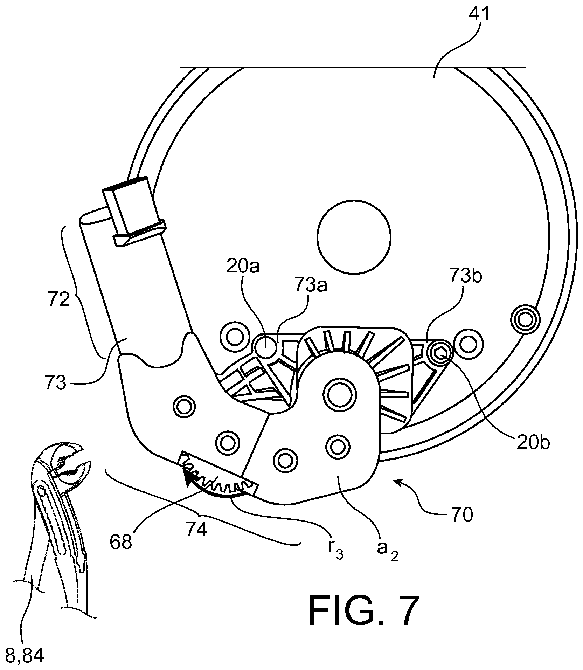

En référence plus spécifiquement au troisième mode de réalisation qui est représenté aux figures 6 et 7, la première région 71 est située au niveau d'une région latérale 70d du carter d'actionneur 70. La première région 71 donne accès à un utilisateur à une roue dentée 68 du dispositif de transmission 64 lorsqu'elle est rompue. L'utilisateur peut alors desserrer manuellement le frein à tambour 2. Le troisième mode de réalisation se distingue principalement du deuxième mode de réalisation par l'emplacement et la forme de la première région 71.

La première région 71 comprend une portion en saillie 77. La première région 71 est configurée pour être en prise avec la tête d'une pince coupante 84. La première région 71 présente une surface a₁ qui est sensiblement égale à celle d'un demi-diamètre de la roue dentée 68.

La portion en saillie 77 est en saillie depuis une surface externe du carter 74 du dispositif de transmission. Elle comprend un premier bord latéral 77a et un deuxième bord latéral 77b. Les bords latéraux 77a, 77b sont séparés par un évidement. Ils sont destinés à être agrippés par la pince coupante 84, pour rompre la première région 71. La portion en saillie 77 forme un repère visuel de la première région 71 relativement à la deuxième région 73.

En référence plus spécifiquement à la figure 7, la roue dentée 68 du dispositif de transmission a été rendu accessible à l'utilisateur par la rupture de la portion en saillie 77. L'utilisateur peut alors se servir de la pince coupante 84 ou de ses doigts, pour entrainer en rotation la roue dentée 68 du dispositif de transmission par rapport au carter d'actionneur 70. La roue dentée 68 est entrainée en rotation selon la flèche R₃ autour de son axe de rotation qui est sensiblement orthogonal à l'axe longitudinal Z-Z du dispositif de transmission 64. L'utilisateur desserre alors le frein à tambour 2. Une fois que le frein 2 est desserré, l'utilisateur peut déplacer le véhicule 1, avant de retirer la roue et le frein 2. Il peut alors remplacer le frein 2 et/ou seulement l'actionneur 6.

La pince coupante 84 sert alors à la fois d'outil 8 pour rompre la première région 71 et d'outil pour desserrer manuellement le frein, ce qui facilite le desserrage du frein 2. La pince coupante 84 est par exemple attachée au frein 2, notamment au carter d'actionneur 70, lorsqu'elle n'est pas utilisée.

Le carter d'actionneur 70 est par exemple réalisé par moulage. La première région 71 est fabriquée avec une épaisseur qui est inférieure à celle de la deuxième région 73, pour être rompue par l'utilisateur.

De manière générale, la première région 71 est déterminée pour en donner accès au moteur électrique 62 et/ou au dispositif de transmission 64, de manière à ce desserrer le frein 2 de manière irréversible, au moins sans apport extérieur d'énergie.

La première région 71 rend possible le desserrage manuel du frein 2 lorsqu'elle est rompue, sans avoir à démonter la roue et le frein 2 au préalable. Ce desserrage manuel du frein a lieu, par exemple pour remplacer l'actionneur 6.

Le carter d'actionneur 70 définit un logement du moteur électrique 62 et du dispositif de transmission 64 qui est entièrement fermé, avant rupture de la première région 71. Les risques de corrosion à l'intérieur du carter d'actionneur 70 sont donc limités, en fonctionnement normal du frein 2.

L'outil 8 de rupture de la première région est notamment un outil classique dans le domaine automobile, ce qui facilite le desserrage manuel du frein. Il peut facilement être remplacé s'il est perdu.

Bien entendu, diverses modifications peuvent être apportées par l'homme du métier à l'invention qui vient d'être décrite sans sortir du cadre de l'exposé de l'invention.

En variante, le frein 2 est un frein à disque électromécanique. L'actionneur 6 est alors configuré pour entrainer le déplacement d'un piston de frein relativement à un disque.

En variante, le frein à tambour 2 est dépourvu de cylindre de roue. Dans ce cas, il n'est pas raccordé à un circuit hydraulique de freinage.

L'emplacement de la première région 71 et les dimensions de la première région 71 relativement à la deuxième région 73 peuvent varier. La première région 71 peut être dépourvue de portion en saillie 77 par rapport à la surface externe du carter d'actionneur 70.

En variante ou en plus, la première région 71 est fabriquée dans un matériau différent de celui de la deuxième région 73, en étant moins résistant mécaniquement que celui de la deuxième région 73.

La nature de l'outil 8 de rupture de la première région est variable. Il peut être utilisable ou non pour desserrer manuellement le frein 2.

### NOMENCLATURE EN REFERENCE AUX FIGURES

- 1 :: véhicule
- 2 :: frein
- 6 :: actionneur électromécanique
- 8 :: outil de rupture de la première région
- 10 :: moyeu
- 12 :: châssis du véhicule
- 20a :: première attache de fixation du carter d'actionneur
- 20b :: deuxième attache de fixation du carter d'actionneur
- 40 :: tambour
- 41 :: plateau
- 42 :: mâchoire
- 44 :: garniture de frein
- 62 :: moteur électrique
- 63 :: arbre principal du moteur
- 64 :: dispositif de transmission
- 66 :: arbre du dispositif de transmission
- 68 :: roue dentée du dispositif de transmission
- 70 :: carter d'actionneur
- 70a :: extrémité externe
- 70c :: région centrale
- 70d :: région latérale
- 70e :: extrémité interne
- 71 :: première région
- 73 :: deuxième région
- 72 :: carter de moteur électrique
- 74 :: carter de dispositif de transmission
- 75 :: marquage
- 77 :: portion en saillie
- 80 :: clé hexagonale
- 82 :: tournevis
- 84 :: pince coupante
- a₁ :: surface de la première région
- a₂ :: surface de la deuxième région
- X-X :: axe longitudinal du carter de moteur
- Y-Y :: axe longitudinal d'un arbre de transmission
- Z-Z :: axe longitudinal du carter de dispositif de transmission

## Revendications

1. Actionneur électromécanique (6) pour frein de véhicule, comprenant :
un moteur électrique (62),
un dispositif de transmission (64) configuré pour être entrainé par le moteur électrique (62) lors du freinage et du défreinage,
**caractérisé en ce que** l'actionneur (6) comprend un carter (70) comprenant une première région (71) et une deuxième région (73) de plus grande résistance mécanique que la première région (71), la première région (71) étant configurée pour être rompue en donnant accès au moteur électrique (62) et/ou au dispositif de transmission (64) pour desserrer le frein.

2. Actionneur (6) selon la revendication précédente, dans lequel le carter (70) est étanche aux liquides, notamment à l'eau, lorsque la première région (71) n'est pas rompue.

3. Actionneur (6) selon l'une quelconque des revendications précédentes, dans lequel la première région (71) est à un emplacement prédéterminé du carter (70) et avec une surface (a₁) prédéterminée, la deuxième région (73) ayant de préférence une surface supérieure (a₂) à la surface (a₁) de la première région (71).

4. Actionneur (6) selon l'une quelconque des revendications précédentes, dans lequel la première région (71) est configurée pour être plus accessible à un utilisateur qu'au moins une attache (20a, 20b) configurée pour raccorder l'actionneur (6) à un plateau (41) de frein et/ou un étrier de frein, lorsque l'actionneur (6) est monté sur le véhicule.

5. Actionneur (6) selon l'une quelconque des revendications précédentes, dans lequel la première région (71) comprend un repère visuel (75, 77) pour la repérer sur le carter (70), le repère visuel comprenant de préférence un marquage (75) et/ou une portion en saillie (77) d'une surface externe du carter (70).

6. Actionneur (6) selon l'une quelconque des revendications précédentes, dans lequel la première région (71) est configurée pour être rompue par un outil (8) de serrage et/ou un outil contendant,
l'outil de serrage comprenant de préférence une tête de serrage tel qu'une clé hexagonale (80) ou un tournevis (82), l'outil contendant comprenant notamment une pince coupante (84).

7. Actionneur (6) selon l'une quelconque des revendications précédentes, dans lequel la première région (71) est configurée pour donner accès à un arbre (63) du moteur et/ou à un élément de transmission du dispositif de transmission (64) tel qu'un arbre (66) ou une roue dentée (68), et/ou
dans lequel la première région (71) est située à une extrémité longitudinale (70a) du carter de l'actionneur, au niveau d'une région centrale (70c) du carter de l'actionneur selon sa direction transversale, ou à une extrémité latérale (70d) du carter de l'actionneur.

8. Frein (2) de véhicule comprenant un actionneur (6) selon l'une quelconque des revendications précédentes, le frein (2) étant de préférence un frein à tambour.

9. Ensemble de freinage comprenant un frein selon la revendication précédente et un outil (8) configuré pour rompre la première région (71) de l'actionneur (6) du frein, l'outil (8) étant attaché au frein (2), notamment lorsque le frein (2) est monté sur le véhicule (1).

10. Ensemble de freinage selon la revendication précédente, dans lequel l'outil (8) configuré pour rompre la première région (71) est configuré pour desserrer le frein lorsque la première région (71) est rompue.

## Patentansprüche

1. Elektromechanischer Aktuator (6) für Fahrzeugbremse, aufweisend:
einen Elektromotor (62),
eine Getriebevorrichtung (64), die konfiguriert ist, um, bei einer Bremsung und bei einer Beendigung einer Bremsung, durch den Elektromotor (62) angetrieben zu werden,
**dadurch gekennzeichnet, dass** der Aktuator (6) ein Gehäuse (70) aufweist, das einen ersten Bereich (71) und einen zweiten Bereich (73) aufweist, dessen mechanische Festigkeit größer als die des ersten Bereichs (71) ist, wobei der erste Bereich (71) konfiguriert ist, abgebrochen zu werden, wobei dabei ein Zugang zum Elektromotor (62) und/oder zur Getriebevorrichtung (64) ermöglicht wird, um die Bremse zu lösen.

2. Aktuator (6) nach dem vorhergehenden Anspruch, wobei das Gehäuse (70) flüssigkeitsdicht ist, insbesondere gegenüber Wasser, wenn kein Abbrechen des ersten Bereichs (71) erfolgt ist.

3. Aktuator (6) nach einem der vorhergehenden Ansprüche, wobei der erste Bereich (71) sich an einer vorbestimmten Stelle des Gehäuses (70) befindet und eine vorbestimmte Fläche (a₁) hat, wobei der zweite Bereich (73) vorzugsweise eine Fläche (a₂) hat, die größer als die Fläche (a₁) des ersten Bereichs (71) ist.

4. Aktuator (6) nach einem der vorhergehenden Ansprüche, wobei der erste Bereich (71) konfiguriert ist, um für einen Benutzer besser zugänglich als mindestens eine Befestigungseinrichtung (20a, 20b) zu sein, die konfiguriert ist, den Aktuator (6) mit einer Platte (41) der Bremse und/oder einem Bremssattel zu verbinden, wenn der Aktuator (6) am Fahrzeug montiert ist.

5. Aktuator (6) nach einem der vorhergehenden Ansprüche, wobei der erste Bereich (71) eine Sichtmarkierung (75, 77) aufweist, um diesen auf dem Gehäuse (70) zu markieren, wobei die Sichtmarkierung vorzugsweise eine Marke (75) und /oder einen von der Außenfläche des Gehäuses (70) vorspringenden Abschnitt (77) aufweist.

6. Aktuator (6) nach einem der vorhergehenden Ansprüche, wobei der erste Bereich (71) konfiguriert ist, um durch ein Spannwerkzeug (8) und/oder ein gegeneinander arbeitendes Werkzeug abgebrochen zu werden,
wobei das Spannwerkzeug vorzugsweise einen Spannkopf wie beispielsweise einen Sechskantschlüssel (80) oder einen Schraubendreher (82) beinhaltet und das gegeneinander arbeitende Werkzeug insbesondere eine Schneidzange (84) beinhaltet.

7. Aktuator (6) nach einem der vorhergehenden Ansprüche, wobei der erste Bereich (71) konfiguriert ist, um einen Zugang zu einer Welle (63) des Motors und/oder zu einem Getriebeelement der Getriebevorrichtung (64) wie beispielsweise einer Welle (66) oder einem Zahnrad (68) zu ermöglichen, und/oder
wobei der erste Bereich (71) sich an einem Längsende (70a) des Aktuatorgehäuses befindet, und zwar in einem bezogen auf die Querrichtung des Aktuatorgehäuses mittleren Bereich (70c), oder sich an einem seitlichen Ende (70d) des Aktuatorgehäuses befindet.

8. Fahrzeugbremse (2) mit einem Aktuator (6) nach einem der vorhergehenden Ansprüche, wobei die Bremse (2) vorzugsweise eine Trommelbremse ist.

9. Bremsbaugruppe mit einer Bremse nach dem vorhergehenden Anspruch und einem Werkzeug (8), das konfiguriert ist, den ersten Bereich (71) des Aktuators (6) der Bremse abzubrechen, wobei das Werkzeug (8) an der Bremse (2) befestigt ist, insbesondere wenn die Bremse (2) am Fahrzeug (1) montiert ist.

10. Bremsbaugruppe nach dem vorhergehenden Anspruch, wobei das zum Abbrechen des ersten Bereichs (71) konfigurierte Werkzeug (8) konfiguriert ist, die Bremse zu lösen, wenn ein Abbrechen des ersten Bereichs (71) erfolgt ist.

## Claims

1. Electromechanical actuator (6) for vehicle brake, comprising:
an electric motor (62),
a transmission device (64) configured to be driven by the electric motor (62) when applying and releasing the brake,
**characterised in that** the actuator (6) comprises a case (70) including a first region (71) and a second region (73) that is mechanically stronger than the first region (71),
wherein the first region (71) is configured to break, providing access to the electric motor (62) and/or to the transmission device (64), to release the brake.

2. Actuator (6) according to the preceding claim, wherein the case (70) is leak tight to liquids and particularly to water, when the first region (71) is not broken.

3. Actuator (6) according to any one of the preceding claims, wherein the first region (71) is at a predetermined location of the case (70) and has a predetermined surface area (a₁),
wherein the second region (73) preferably has a larger surface area (a₂) than the surface area (a₁) of the first region (71).

4. Actuator (6) according to any one of the preceding claims, wherein the first region (71) is configured to be more accessible to a user than at least one attachment (20a, 20b) configured to connect the actuator (6) to a brake plate (41) and/or a brake calliper, when the actuator (6) is mounted on the vehicle.

5. Actuator (6) according to any one of the preceding claims, wherein the first region (71) comprises a visual mark (75, 77) to identify it on the case (70),
wherein the visual mark preferably comprises marking (75) and/or a portion (77) projecting from an outer surface of the case (70).

6. Actuator (6) according to any one of the preceding claims, wherein the first region (71) is configured to be broken by a tightening tool (8) and/or a cutting tool,
wherein the tightening tool preferably comprises a tightening head such as a hex spanner (80) or a screwdriver (82), and/or
wherein the cutting tool comprises in particular cutting pliers (84).

7. Actuator (6) according to any one of the preceding claims, wherein the first region (71) is configured to provide access to a shaft (63) of the motor and/or a transmission element of the transmission device (64) such as a shaft (66) or toothed wheel (68), and/or
wherein the first region (71) is located at a longitudinal end (70a) of the actuator case, at a central region (70c) of the actuator case along its transverse direction, or at a lateral end (70d) of the actuator case.

8. Vehicle brake (2) comprising an actuator (6) according to any one of the preceding claims, wherein the brake (2) preferably is a drum brake.

9. Brake assembly comprising a brake according to the preceding claim and a tool (8) configured to break the first region (71) of the brake actuator (6),
wherein the tool (8) is attached to the brake (2), particularly when the brake (2) is mounted on the vehicle (1).

10. Brake assembly comprising a brake according to the preceding claim, wherein the tool (8) configured to break the first region (71) is configured to release the brake when the first region (71) is broken.
